# FASCICULE DE BREVET EUROPEEN

(11) **EP 2 942 094 B1**
(45) Date de publication et mention de la délivrance du brevet: **17.08.2016**
(21) Numéro de dépôt: 15165187.4
(22) Date de dépôt: 27.04.2015
(51) Int. Cl.: A63H 27/00

(54) **DRONE À VOILURE TOURNANTE DE TYPE QUADRICOPTÈRE, POURVU DE PARE-CHOCS AMOVIBLES DE PROTECTION DES HÉLICES**
DREHFLÜGEL-DROHNE VOM TYP QUADROKOPTER, DIE MIT ABNEHMBAREN STOSSFÄNGERN ZUM SCHUTZ DER PROPELLER AUSGESTATTET IST
ROTARY-WING DRONE SUCH AS A QUADCOPTER, WITH REMOVABLE BUMPERS FOR PROPELLER PROTECTION

(30) Priorité: 06.05.2014 FR 1454084
(43) Date de publication de la demande: 11.11.2015
(73) Titulaire: Parrot Drones, 75010 Paris (FR)
(72) Inventeur: Caubel, Christine, 75010 PARIS (FR)
(74) Mandataire: Dupuis-Latour, Dominique

(56) Documents cités:
- EP-A2- 1 245 257
- CN-A- 102 381 471
- DE-U1-202013 101 170
- US-A1- 2014 099 853

## Description

L'invention concerne les drones à voilure tournante, tels que les quadri-coptères.

Ces drones comprennent un corps de drone et une pluralité de blocs propulseurs avec chacun une hélice entrainée par un moteur individuel. Chaque bloc propulseur est monté à l'extrémité d'un bras respectif de liaison au corps du drone. Un exemple typique d'un tel drone est l'*AR.Drone* 2.0 de Parrot SA, Paris.

Il est souhaitable de protéger les hélices à l'encontre des chocs qu'elles pourraient subir contre des obstacles lors de l'évolution du drone, notamment lorsque celui-ci est utilisé dans un espace relativement confiné, et inversement de protéger les individus et les objets d'un contact avec ces hélices au cas où le drone viendrait à les toucher.

Le drone est certes muni de moyens permettant de détecter toute anomalie de rotation des moteurs qui serait due à une entrave à la rotation des hélices, de manière à couper immédiatement l'alimentation des moteurs pour éviter toute aggravation de la situation. Mais dans le cas de chocs légers, cette solution extrême peut être excessive, alors même que le drone a seulement effleuré l'obstacle.

Pour ces raisons, les drones sont généralement pourvus d'un carénage de protection monté au niveau des hélices, et s'étendant dans le plan horizontal au-delà de la zone de rotation de ces dernières. Dans le cas d'un quadricoptère, notamment dans le cas de l*'AR.Drone 2.0* précité, ce carénage a la forme d'une couronne monobloc en matière plastique expansée moulée, entourant le drone de tous côtés, avec quatre anneaux réunis ensemble et correspondant aux quatre zones de rotation des hélices. L'ensemble est solidaire d'une coque de protection du corps de drone et peut être retiré complètement, lorsque l'utilisateur souhaite piloter le drone sans protection, dans un espace ouvert sans risques.

Le US2014/099853 A1 divulgue un type comparable de quadricoptère, muni d'un carénage de protection amovible.

D'autres configurations encore de carénages de protection, amovibles ou non, sont décrites dans les DE 20 2013 101 170 U1, CN 102381471 A ou EP 1 245 257 A2.

Une protection en forme de carénage moulé est extrêmement efficace comme pare-chocs. En revanche, elle n'est pas dépourvue d'inconvénients.

En premier lieu, lorsque le drone est équipé de ce carénage de protection, ses performances aérodynamiques sont notablement réduites du fait, à la fois, du supplément de masse dû au carénage et de la trainée accrue que ce dernier oppose aux déplacements rapides du drone, notamment dans un plan horizontal. Pour cette raison, les utilisateurs choisissent souvent de faire évoluer le drone sans son carénage de protection, au prix de risque de chocs par les hélices.

En second lieu, lorsqu'il est retiré, le carénage est encombrant du fait de sa forme avec les quatre anneaux assemblés ensemble et reliés à la coque de protection du corps de drone. En outre, pour disposer des deux configurations possibles protégée/non-protégée, l'utilisateur doit emporter à la fois un carénage de protection, c'est-à-dire comprenant la coque avec les quatre anneaux, et une coque seule destinée à être montée sur le corps du drone dans la configuration non protégée.

In subsiste donc le besoin de disposer d'un moyen de protection pour un drone à voilure tournante de type quadricoptère, qui soit plus fonctionnel que ce qui a pu être proposé jusqu'à présent, en répondant à l'ensemble des impératifs suivants :
- caractère démontable, de manière à pouvoir disposer, au choix de l'utilisateur, d'une configuration de drone avec/sans protection ;
- simplicité de montage/démontage de la protection, sans recours à aucun outil ;
- masse minimale, de manière à ne pas obérer les performances du drone lorsque la protection a été montée dessus, donc limitation au strict minimum des structures et équipements mécaniques, sans pour autant altérer leur rigidité et leur robustesse ;
- encombrement minimal, de manière à ne pas embarrasser l'utilisateur lorsque ce dernier n'utilise pas la protection mais la conserve néanmoins à portée de main ;
- réduction à un minimum de la trainée additionnelle due à la présence de la protection, de manière à ne pas freiner l'avancée du drone en configuration protégée ;
- incidence minimale sur la portance de la voilure tournante, la surface des éléments situés sous l'hélice devant être la plus réduite possible pour ne pas en perturber l'aérodynamisme.

L'invention a pour objet un nouveau type de protection pour drone de type quadricoptère permettant d'atteindre l'ensemble de ces buts.

Elle propose à cet effet un tel drone comprenant, de manière en elle-même connue notamment d'après le US2014/0099853 A1 précité : un corps de drone ; une pluralité de blocs propulseurs montés à distance du corps de drone à l'extrémité de bras support respectifs, chaque bloc propulseur comprenant un moteur d'entrainement d'une hélice, avec un boitier de bloc propulseur comprenant un fût vertical ; et des moyens amovibles de protection des hélices.

De façon caractéristique de l'invention :
- les moyens amovibles de protection des hélices comprennent des pare-chocs amovibles latéraux s'étendant, dans un plan horizontal, au-delà de la zone de rotation des hélices, chaque pare-chocs étant relié aux blocs propulseurs situés du même côté du drone par des bras de liaison respectifs ;
- chaque bras de liaison comprend à son extrémité proximale une pince de montage sur le fût du groupe propulseur ;
- la pince de montage comprend un tube cylindrique élastiquement déformable, fendu par une encoche formée côté proximal et s'étendant en direction axiale avec des bords suivant des génératrices parallèles, le diamètre intérieur du tube de la pince de montage étant inférieur au diamètre du fût du bloc propulseur ; et
- la largeur en direction transversale de l'encoche, dans une position de montage/démontage élastiquement déformée de la pince de montage, est supérieure au diamètre du fût du bloc propulseur, pour permettre l'insertion de la pince autour du fût puis serrage de celui-ci par la pince de manière à assujettir le bras du pare-chocs au groupe propulseur, et *vice versa* le démontage du pare-chocs par désolidarisation de la pince d'avec le fût.

Selon diverses caractéristiques subsidiaires avantageuses :
- chaque bras de liaison comprend une paire de lames ou tiges allongées élastiquement déformables, s'étendant à distance l'une de l'autre suivant une direction commune entre, d'une part, l'extrémité distale du bras de liaison où ces lames sont reliées au pare-chocs dans une région de celui-ci tournée vers le corps de drone et, d'autre part, l'extrémité proximale du bras de liaison où ces lames sont reliées à la pince de montage ;
- les deux lames sont aptes à être élastiquement déformées, sous l'effet d'un effort transversal extérieur exercé dans une région médiane des lames dans le sens d'un rapprochement mutuel des bras, vers ladite position de montage/démontage où le rapprochement mutuel des lames produit à l'extrémité proximale des lames, par effet de levier, une sollicitation du tube de la pince dans le sens de l'écartement des bords de l'encoche, puis serrage de la pince autour du fût au relâchement de l'effort transversal exercé sur les bras, de manière à assujettir le bras du pare-chocs au groupe propulseur, et *vice versa* le montage/démontage du pare-chocs par désolidarisation de la pince d'avec le fût, par le seul effort transversal exercé sur les bras de liaison ;
- la section droite des lames est rectangulaire, avec la plus grande dimension de cette section droite orientée parallèlement à l'axe de rotation de l'hélice du bloc propulseur ;
- le bras de liaison, comprenant la paire de lames et la pince de montage, est une pièce monobloc en matière plastique ;
- la section droite du tube cylindrique de la pince présence une forme de C avec deux branches s'étendant de part et d'autre d'une partie centrale formant charnière élastique, et dans lequel les lames sont reliées aux branches respectives du C dans une région médiane de la branche ; et
- le drone est un quadricoptère comprenant quatre blocs propulseurs disposés deux par deux de chaque côté du corps de drone, et dans lequel le drone est pourvu de deux pare-chocs amovibles latéraux disposés symétriquement par rapport au corps du drone, chaque pare-chocs étant pourvu de deux bras de liaison aux groupes propulseurs respectifs situés du même côté du corps du drone.

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue en perspective d'un drone muni de ses pare-chocs de protection selon l'invention.
La Figure 2 est une vue en perspective d'un pare-chocs représenté isolément, montrant notamment les moyens de liaison et de fixation au drone.
La Figure 3 est une vue en plan, partielle et agrandie, du pare-chocs de la Figure 2, montrant notamment la structure du bras de liaison et de la pince de fixation.

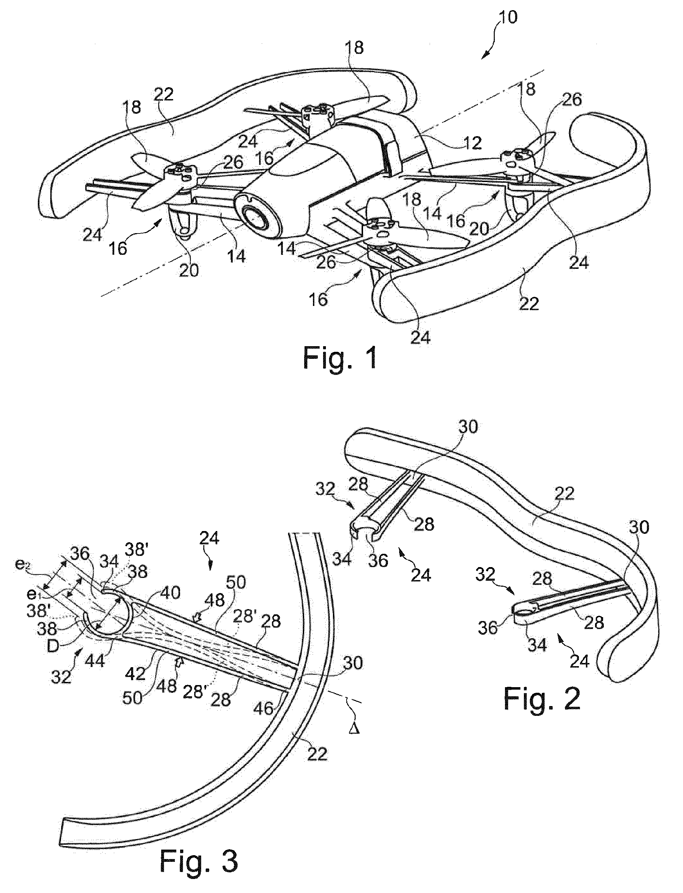

Sur la Figure 1, on a représenté un drone 10 de type quadricoptère, avec un corps central de drone 12, à partir duquel rayonnent quatre bras supports 14. Chaque bras support 14 est équipé à son extrémité distale d'un bloc propulseur 16 comprenant un moteur entrainant en rotation une hélice 18 s'étendant dans un plan horizontal au-dessus du bras support 14. En partie inférieure, le bloc propulseur 16 est prolongé par un étrier formant pied 20 sur lequel pourra reposer au sol le drone à l'arrêt.

Pour assurer la protection des hélices, le drone est pourvu de deux pare-chocs amovibles latéraux 22 disposés symétriquement par rapport au corps de drone 12. Les pare-chocs présentent une forme allongée et s'étendent, dans le plan horizontal, au-delà de la zone de rotation des hélices 18, assurant ainsi une protection principalement à l'égard des chocs latéraux : ainsi, en cas de mouvement latéral erratique du drone, le pare-chocs 22 vient s'interposer entre un obstacle éventuel et les hélices 18, protégeant ces dernières. Le contact du pare-chocs 22 avec l'obstacle aura également pour effet de provoquer un rebond latéral du drone, tendant à éloigner celui-ci de l'obstacle.

L'étendue vers l'avant du pare-chocs 22 est limitée de manière à ne pas apparaitre dans le champ de la caméra frontale du drone, qui est une caméra grand-angle ; à l'arrière, le pare-chocs 22 peut s'étendre avec une partie légèrement arrondie venant envelopper une partie de l'hélice arrière et protéger ainsi cette dernière en cas de recul du drone.

Chacun des deux pare-chocs 22 est relié aux deux blocs propulseurs 16 situés du même côté, par l'intermédiaire d'une paire correspondante de bras de liaison 24 dont l'extrémité proximale (celle la plus proche du corps de drone 12) vient s'emboiter sur une partie coopérante 26 du bloc propulseur 16, par exemple un fût cylindrique vertical du boitier de ce bloc propulseur 16.

La Figure 2 illustre plus en détail la structure de l'un des pare-chocs 22 (l'autre étant symétrique), et notamment des bras de liaison 24 et de leurs moyens de montage sur le fût du bloc propulseur.

Chacun des bras de liaison 24 est avantageusement constitué de deux lames ou tiges 28 sensiblement parallèles s'étendant entre, d'une part, une extrémité distale 30 où elles sont reliées au pare-chocs proprement dit dans une région de celui-ci tournée vers le corps de drone, et une extrémité proximale pourvue d'un moyen 32 formant pince de montage sur le fût du bloc propulseur. Cette pince de montage comprend un tube cylindrique 34 fendu par une encoche 36 côté proximal (le côté tourné vers le bloc propulseur), cette encoche étant formée avec des bords correspondant à des génératrices parallèles verticales du tube 34.

Les lames 28 sont avantageusement de section rectangulaire avec leur plus grande dimension orientée verticalement, c'est-à-dire parallèlement à l'axe de l'hélice, de manière que la présence de ces lames, qui viennent se placer sous l'hélice 18 lorsque le pare-chocs est monté sur le drone, perturbe le moins possible l'aérodynamisme des hélices et n'introduise qu'une perte de portance négligeable de ce fait.

Le pare-chocs 22 proprement dit est par exemple réalisé en polypropylène expansé, permettant de réaliser une pièce de volume relativement important mais de faible masse, et le bras de liaison 24 est une pièce monobloc en une matière plastique élastiquement déformable, par exemple en ABS, l'ensemble formé par les lames 28 et le tube cylindrique 34 de la pince de montage 32 étant un élément monobloc moulé.

La Figure 3 illustre plus précisément, en plan, la structure du bras de liaison et la manière de manipuler la pince de montage 32 par pincement des lames 28.

La pince de montage 32 présente, en plan, une section en forme de C, avec un diamètre intérieur D légèrement inférieur au diamètre du fût cylindrique 26 du bloc propulseur sur laquelle viendra se placer la pince 32. La section en forme de C comprend deux branches 38 s'étendant à partir d'une partie centrale 40 formant charnière élastique. Pour permettre la déformation de la pince 32, les branches 38 sont reliées à l'extrémité proximale 42 de la lame 28 respective dans une région médiane 44 de la branche 38. L'extrémité opposée, distale, 46 de chacune des lames 28 est reliée au pare-chocs 22 avec lequel elles constituent, mécaniquement, un ensemble monobloc.

La manipulation de la pince de montage 32 est effectuée de la manière suivante.

Pour ouvrir la pince, l'utilisateur exerce un effort transversal extérieur 48 sur chacune des régions médianes 50 des lames 28 dans le sens d'un rapprochement mutuel en direction de leur axe commun Δ. Du fait de la nature élastiquement déformable du matériau constituant les lames 28, celles-ci se déforment, comme illustré en tiretés en 28', ce qui a pour conséquence, par effet de levier exercé sur la région médiane 44 des branches 38, de déformer ces dernières de la manière illustrée en tiretés en 38' , avec pour conséquence une augmentation, de *e₁* à *e₂*, de l'écartement entre les extrémités libres de ces branches 38. L'ensemble est conçu de manière que, pour un pincement complet des lames 28 (c'est-à-dire lorsque celles-ci viennent en contact l'une contre l'autre sur leurs faces intérieures), l'écartement *e₂* entre les extrémités libres des branches 38 soit supérieur au diamètre du fût 26 du bloc propulseur, permettant ainsi d'assembler ou de désassembler sans difficulté la pince de montage 32 et de solidariser chacun des bras de liaison 24 avec le bloc propulseur 16, sans recours à aucun outil. Après mise en place de la pince 32 autour du fût 26 du bloc propulseur 16, le relâchement des deux lames 28 aura pour effet de rapprocher les branches 38, qui viendront enserrer sans jeu le fût 26, du fait du diamètre D légèrement inférieur au diamètre extérieur du fût.

## Revendications

1. Un drone à voilure tournante de type quadricoptère (10), comprenant :
- un corps de drone (12) ;
- une pluralité de blocs propulseurs (16) montés à distance du corps de drone à l'extrémité de bras support (14) respectifs, chaque bloc propulseur comprenant un moteur d'entrainement d'une hélice (18), avec un boitier de bloc propulseur comprenant un fût (26) vertical ; et
- des moyens amovibles de protection des hélices,
**caractérisé en ce que** :
- les moyens amovibles de protection des hélices comprennent des pare-chocs amovibles latéraux (22) s'étendant, dans un plan horizontal, au-delà de la zone de rotation des hélices, chaque pare-chocs étant relié aux blocs propulseurs situés du même côté du drone par des bras de liaison (24) respectifs ;
- chaque bras de liaison comprend à son extrémité proximale (42) une pince de montage (32) sur le fût du groupe propulseur ;
- la pince de montage (32) comprend un tube cylindrique (34) élastiquement déformable, fendu par une encoche (36) formée côté proximal et s'étendant en direction axiale avec des bords suivant des génératrices parallèles, le diamètre intérieur (D) du tube de la pince de montage étant inférieur au diamètre du fût du bloc propulseur ; et
- la largeur (*e₂*) en direction transversale de l'encoche (36), dans une position de montage/démontage élastiquement déformée de la pince de montage (32), est supérieure au diamètre du fût du bloc propulseur, pour permettre l'insertion de la pince autour du fût puis le serrage de celui-ci par la pince de manière à assujettir le bras du pare-chocs au groupe propulseur, et *vice versa* le démontage du pare-chocs par désolidarisation de la pince d'avec le fût.

2. Le drone de la revendication 1, dans lequel :
- chaque bras de liaison comprend une paire de lames (28) ou tiges allongées élastiquement déformables, s'étendant à distance l'une de l'autre suivant une direction commune (Δ) entre, d'une part, l'extrémité distale (46) du bras de liaison où ces lames (28) sont reliées au pare-chocs dans une région (30) de celui-ci tournée vers le corps de drone et, d'autre part, l'extrémité proximale (42) du bras de liaison où ces lames (28) sont reliées à la pince de montage (32) ; et
- les deux lames sont aptes à être élastiquement déformées, sous l'effet d'un effort transversal extérieur (48) exercé dans une région médiane (50) des lames dans le sens d'un rapprochement mutuel des bras, vers ladite position de montage/démontage où le rapprochement mutuel des lames (28') produit à l'extrémité proximale des lames, par effet de levier, une sollicitation du tube de la pince dans le sens de l'écartement des bords de l'encoche (36), puis un serrage de la pince autour du fût au relâchement de l'effort transversal exercé sur les bras, de manière à assujettir le bras du pare-chocs au groupe propulseur, et *vice versa* le montage/démontage du pare-chocs par désolidarisation de la pince d'avec le fût, par le seul effort transversal exercé sur les bras de liaison.

3. Le drone de la revendication 2, dans lequel la section droite des lames (28) est rectangulaire, avec la plus grande dimension de cette section droite orientée parallèlement à l'axe de rotation de l'hélice du bloc propulseur.

4. Le drone de la revendication 2, dans lequel le bras de liaison, comprenant la paire de lames (28) et la pince de montage (32), est une pièce monobloc en matière plastique.

5. Le drone de la revendication 2, dans lequel la section droite du tube cylindrique de la pince présence une forme de C avec deux branches (38) s'étendant de part et d'autre d'une partie centrale (40) formant charnière élastique, et dans lequel les lames sont reliées aux branches respectives du C dans une région médiane (44) de la branche.

6. Le drone de la revendication 1, dans lequel le drone est un quadricoptère comprenant quatre blocs propulseurs (16) disposés deux par deux de chaque côté du corps de drone (12), et dans lequel le drone est pourvu de deux pare-chocs amovibles latéraux (22) disposés symétriquement par rapport au corps du drone, chaque pare-chocs étant pourvu de deux bras de liaison (24) aux groupes propulseurs respectifs (16) situés du même côté du corps du drone.

## Patentansprüche

1. Drehflügel-Drohne von der Art Quadrocopter (10), die enthält:
- einen Drohnenkörper (12);
- eine Vielzahl von Antriebsblöcken (16), die in Abstand zum Drohnenkörper am Ende jeweiliger Trägerarme (14) montiert sind, wobei jeder Antriebsblock einen Antriebsmotor eines Propellers (18) enthält, mit einem Antriebsblockgehäuse, das einen senkrechten Schaft (26) enthält; und
- entfernbare Schutzeinrichtungen der Propeller,
**dadurch gekennzeichnet, dass**:
- die entfernbaren Schutzeinrichtungen der Propeller seitliche entfernbare Stoßfänger (22) enthalten, die sich in einer waagrechten Ebene jenseits des Drehbereichs der Propeller erstrecken, wobei jeder Stoßfänger mit den sich auf der gleichen Seite der Drohne befindlichen Antriebsblöcken durch Verbindungsarme (24) verbunden ist;
- wobei jeder Verbindungsarm an seinem proximalen Ende (42) eine Klemme (32) zur Montage auf den Schaft des Antriebsblocks enthält;
- die Montageklemme (32) ein elastisch verformbares, zylindrisches Rohr (34) enthält, das durch einen auf der proximalen Seite geformten und sich in axialer Richtung mit Rändern entsprechend parallelen Mantellinien erstreckenden Einschnitt (36) gespalten ist, wobei der Innendurchmesser (D) des Rohrs der Montageklemme kleiner als der Durchmesser des Schafts des Antriebsblocks ist; und
- die Breite (e₂) in Querrichtung des Einschnitts (36), in einer elastisch verformten Einbau-/Ausbaustellung der Montageklemme (32), größer als der Durchmesser des Schafts des Antriebsblocks ist, um das Einführen der Klemme um den Schaft und dann dessen Einspannen durch die Klemme, um den Arm des Stoßfängers am Antriebsblock zu befestigen, und umgekehrt, den Ausbau des Stoßfängers durch Lösen der festen Verbindung der Klemme mit dem Schaft zu erlauben.

2. Drohne nach Anspruch 1, wobei:
- jeder Verbindungsarm ein Paar von elastisch verformbaren, länglichen Lamellen (28) oder Stangen enthält, die sich in Abstand zueinander in einer gemeinsamen Richtung (Δ) zwischen einerseits dem distalen Ende (46) des Verbindungsarms, wo diese Lamellen (28) mit dem Stoßfänger in einem zum Drohnenkörper weisenden Bereich (30) von diesem verbunden sind, und andererseits dem proximalen Ende (42) des Verbindungsarms erstrecken, wo diese Lamellen (28) mit der Montageklemme (32) verbunden sind; und
- die zwei Lamellen unter der Wirkung einer in einem medianen Bereich (50) der Lamellen in Richtung einer gegenseitigen Annäherung der Arme ausgeübten äußeren Querkraft (48) elastisch in die Einbau-/Ausbaustellung verformt werden können, in der die gegenseitige Annäherung der Lamellen (28') am proximalen Ende der Lamellen durch Hebelwirkung eine Beanspruchung des Rohrs der Klemme in Richtung des Auseinanderspreizens der Ränder des Einschnitts (36), dann ein Einspannen der Klemme um den Schaft beim Lösen der auf die Arme ausgeübten Querkraft, um den Arm des Stoßfängers mit der Antriebseinheit zu verbinden, und umgekehrt den Einbau/Ausbau des Stoßfängers durch Lösen der Klemme vom Schaft, nur durch die auf die Verbindungsarme ausgeübte Querkraft, erzeugt.

3. Drohne nach Anspruch 2, wobei der Querschnitt der Lamellen (28) rechtwinklig ist, mit der größten Abmessung dieses Querschnitts parallel zur Drehachse des Propellers des Antriebsblocks ausgerichtet.

4. Drohne nach Anspruch 2, wobei der Verbindungsarm, der das Paar von Lamellen (28) und die Montageklemme (32) enthält, ein einstückiges Bauteil aus Kunststoff ist.

5. Drohne nach Anspruch 2, wobei der Querschnitt des zylindrischen Rohrs der Klemme die Form eines C mit zwei Schenkeln (38) aufweist, die sich zu beiden Seiten eines zentralen Teils (40) erstrecken, der ein elastisches Scharnier bildet, und wobei die Lamellen mit den jeweiligen Schenkeln des C in einem mittleren Bereich (44) des Schenkels verbunden sind.

6. Drohne nach Anspruch 1, wobei die Drohne ein Quadrocopter ist, der vier Antriebsblöcke (16) enthält, die paarweise auf jeder Seite des Drohnenkörpers (12) angeordnet sind, und wobei die Drohne mit zwei seitlichen entfernbaren Stoßfängern (22) versehen ist, die bezüglich des Körpers der Drohne symmetrisch angeordnet sind, wobei jeder Stoßfänger mit zwei Verbindungsarmen (24) mit den Antriebseinheiten (16) versehen ist, die sich auf der gleichen Seite des Körpers der Drohne befinden.

## Claims

1. A rotary-wing drone of the quadricopter type (10), comprising:
- a drone body (12);
- a plurality of propulsion units (16) mounted remote from the drone body, at the end of respective support arms (14), each propulsion unit comprising a motor for driving a propeller (18), with a propulsion unit casing comprising a vertical barrel (26); and
- removable means for protecting the propellers;
**characterized in that**:
- the removable means for protecting the propellers comprise removable lateral bumpers (22) extending, in a horizontal plane, beyond the zone of rotation of the propellers, each bumper being connected to the propulsion units located on the same side of the drone by respective connection arms (24);
- each connection arm comprises at its proximal end (42) a clamp (32) for the mounting to the propulsion unit barrel;
- the mounting clamp (32) comprises an elastically deformable cylindrical tube (34), provided with a notch (36) formed on the proximal side and extending axially with edges following parallel generating lines, the inner diameter (D) of the tube of the mounting clamp being lower than the diameter of the propulsion unit barrel; and
- the transverse width (*e₂*) of the notch (36), in an elastically deformed mounting / dismounting position of the mounting clamp (32), is higher than the diameter of the propulsion unit barrel, to allow the insertion of the clamp about the barrel then the clamping of the latter by the clamp so as to fasten the bumper arm to the propulsion unit and, *vice versa,* the dismounting of the bumper by detachment of the clamp from the barrel.

2. The drone of claim 1, wherein:
- each connection arm comprises a pair of elastically deformable blades (28) or elongated rods, extending remote from each other following a common direction (Δ) between, on the one hand, the distal end (46) of the connection arm where these blades (28) are connected to bumper in a region (30) of the latter that is turned towards the drone body and, on the other hand, the proximal end (42) of the connexion arm where these blades (28) are connected to the mounting clamp (32) ; and
- the two blades are adapted to be elastically deformed, under the effect of an external transverse effort (48) exerted in a median region (50) of the blades in the direction of a mutual moving of the arms closer to each other, towards said mounting / dismounting position where the mutual moving of the blades (28') closer to each other produces at the proximal end of the blades, by a lever effect, a stressing of the clamp tube in the direction of moving of the notch (36) edges apart from each other, then a clamping of the clamp about the barrel upon releasing of the transverse effort exerted on the arm, so as to fasten the bumper arm to the propulsion unit and, vice versa, the mounting / dismounting of the bumper by detachment of the clamp from the barrel, by the only transverse effort exerted on the connection arms.

3. The drone of claim 2, wherein the cross-section of the blades (28) is rectangular, with the greatest dimension of this cross-section oriented parallel to the axis of rotation of the propulsion unit propeller.

4. The drone of claim 2, wherein the connexion arm, comprising the pair of blades (28) and the mounting clamp (32), is a single-piece part made of plastic material.

5. The drone of claim 2, wherein the cross-section of the clamp cylindrical tube has a C-shape with two branches (38) extending on either side of a central portion (40) forming an elastic hinge, and wherein the blades are connected to the respective branches of the C in a median region (44) of the branch.

6. The drone of claim 1, wherein the drone is a quadricopter comprising four propulsion units (16) arranged two by two on either side of the drone body (12), and wherein the drone is provided with two lateral removable bumpers (22) arranged symmetrically with respect to the drone body, each bumper being provided with two arms (24) for the connexion to the respective propulsion units (16) located on the same side of the drone body.
